Europäisches Patentamt

European Patent Office

Office européen des brevets

(19)

(11) **EP 1 257 091 A1**

(12) # EUROPEAN PATENT APPLICATION

(43) Date of publication:
**13.11.2002 Bulletin 2002/46**

(51) Int Cl.⁷: $H04L\ 12/28$

(21) Application number: **01304129.8**

(22) Date of filing: **08.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Agere Systems Guardian Corporation Orlando, Florida 32819 (US)**

(72) Inventors:
• **Busch, Patrick**
  **7511 DP Enschede, Twente (NL)**
• **Malhotra, Richa**
  **7511 DG Enschede, Twente (NL)**

(74) Representative: **Williams, David John et al**
**Page White & Farrer,**
**54 Doughty Street**
**London WC1N 2LS (GB)**

(54) **Corrected predictions for wireless LAN with dynamic frequency selection (DFS)**

(57) The present invention describes an algorithm for the selection of channels used by access points (APs) in wireless LANs in a dynamic way in order to achieve the best performance. The selection of channels is based on a procedure in which an AP is scanning its possible channels in order to gather information on interference and channel sharing. A decision for the optimum channel is based on estimated interference and channel sharing, calculated with help of information coming from other APs, and on experienced interference and channel sharing that is calculated using information on foreign activity time of the AP and the amount of retransmitted data by the AP.

Fig 1

EP 1 257 091 A1

**Description**

**Field of the invention**

The present invention relates to a communication system comprising a plurality of access points (APs) and network stations, each said network station being arranged to communicate with one of said access points through a wireless communication protocol.

**Background**

Wireless local area networks (LANs) have been developed as an enhanced replacement for wired LANs. In a wireless LAN for data-communication a plurality of (mobile) network stations (e.g., personal computers, telecommunication devices, etc.) are present that are capable of wireless communication. As compared to wired LANs, data-communication in a wireless LAN can be more versatile, due to the flexibility of the arrangement of network stations in the area covered by the LAN, and due to the absence of cabling connections.

Wireless LANs are generally implemented according to the standard as defined by the ISO/IEC 8802-11 international standard (IEEE 802.11). IEEE 802.11 describes a standard for wireless LAN systems that will operate in the 2.4 - 2.5 GHz ISM (industrial, scientific and medical) band. This ISM band is available worldwide and allows unlicensed operation for spread spectrum systems. For both the US and Europe, the 2,400 - 2,483.5 MHz band has been allocated, while for some other countries, such as Japan, another part of the 2.4 - 2.5 GHz ISM band has been assigned. The IEEE 802.11 standard focuses on the MAC (medium access control) and PHY (physical layer) protocols for AP based networks and ad-hoc networks.

In AP based wireless networks, the stations within a group or cell can communicate only directly to the AP. This AP forwards messages to the destination station within the same cell or through the wired distribution system to another AP, from which such messages arrive finally at the destination station. In ad-hoc networks, the stations operate on a peer-to-peer level and there is no AP or (wired) distribution system.

The 802.11 standard supports three PHY protocols: DSSS (direct sequence spread spectrum), FHSS (frequency hopping spread spectrum), and infrared with PPM (pulse position modulation). All these three PHYs provide bit rates of 1 and 2 Mbit/s. Furthermore, IEEE 802.11 includes extensions 11a and 11b which allow for additional higher bit rates: Extension 11b provides bit rates 5.5 and 11 Mbit/s as well as the basic DSSS bit rates of 1 and 2 Mbit/s within the same 2.4 - 2.5 GHz ISM band. Extension 11a provides a high bit rate OFDM (Orthogonal Frequency Division Multiplexing modulation) PHY standard providing bit rates in the range of 6 to 54 Mbit/s in the 5 GHz band.

The IEEE 802.11 basic MAC protocol allows interoperability between compatible PHYs through the use of the CSMA/CA (carrier sense multiple access with collision avoidance) protocol and a random back-off time following a busy medium condition. The IEEE 802.11 CSMA/CA protocol is designed to reduce the collision probability between multiple stations accessing the medium at the same time. Therefore, a defer and random back-off arrangement is used to resolve medium contention conflicts. The defer decision is based on a configuration entity called the defer threshold (R_defer). When a carrier signal level is observed above the R_defer level, a network station holds up a pending transmission request. If the observed level is below the R_defer, a network transmission is allowed to start communicating with its associated access point.

In addition, the IEEE 802.11 MAC protocol defines special functional behaviour for fragmentation of packets, medium reservation via RTS/CTS (request-to-send/clear-to-send) polling interaction and point co-ordination (for time-bounded services). Moreover, the IEEE 802.11 MAC protocol defines Beacon frames sent at regular intervals by the AP to allow stations to monitor the presence of the AP. The IEEE 802.11 MAC protocol also gives a set of management frames including Probe Request frames, which are sent by a station and are followed by Probe Response frames sent by an available AP. This protocol allows a station to actively scan for APs operating on other frequency channels and for the APs to show to the stations what parameter settings the APs are using. In 802.11 AP-based wireless LANs the network stations normally associate to an AP that is the best received and the nearest and has a corresponding network name.

Every DSSS AP operates on one channel. The number of channels depends on the regulatory domain in which the wireless LAN is used (e.g. 11 channels in the US in the 2.4 GHz band). This number can be found in ISO/IEC 8802-11, ANSI/IEEE Std 802.11 Edition 1999-00-00. Overlapping cells using different channels can operate simultaneously without interference if the channel distance is at least 3. Nonoverlapping cells can always use the same channels simultaneously without interference. Channel assignment can be dynamic or fixed. Dynamic channel assignment is preferable as the environment itself is dynamic as well and it simplifies the installation of a wireless LAN.

**Prior Art**

The aim of the dynamic frequency selection (DFS) algorithm in **[Kamerman, Dec 1999]** is to dynamically select channels in a wireless LAN in such a way that the best performance is achieved. Performance can be expressed in terms of throughput, delay and fairness. An AP with dynamic frequency selection is able to switch its channel in order to obtain a better operating channel. It will usually choose a channel with less interference and channel sharing than that on the current channel. An AP will scan on all channels to determine which channel frequencies are in use, and to determine the received signal strength and load of neighbouring APs. During a scan of a channel the AP sends a Probe Request frame to evoke a Probe Response from all APs tuned to the same channel and within radio range. The Probe Response packet carries information on load factor from each AP on the channel in question.

By scanning over all channels, an AP assembles a table with an entry for each channel. Each entry contains receive level, the load factor as reported in the Probe Response packet and the measured noise level. The receive level stored in the table is the level at which the Probe Response packet is received from another AP operating on the channel in question. The said table is used in a DFS algorithm as described in **[Kamerman, Dec 1999].** This DFS algorithm, once implemented in an access point, is very dependent on information from other access points. This information may be of limited use for three reasons:

- The load information that is provided by some access points, includes traffic from their stations. The algorithm assumes that an access point and its stations are at the same location. This assumption may lead to large differences between expected and actual interference and sharing.
- Not all access points provide load information.
- Not all wireless devices are IEEE 802.11 access points or stations.

It is an object of the present invention to overcome the problems mentioned above by adjusting the DFS algorithm of **[Kamerman, Dec 1999].**

**Summary of the invention**

The present invention relates to an access point for a wireless LAN communication network comprising a processor and memory storing data and instructions and arranged to:

- monitor its access point traffic load
- send probe requests and probe responses to other access points
- receive probe requests and probe responses from other access points
- include information on said traffic load in said probe responses
- calculate and store an estimated interference parameter for each of a plurality of its possible channels
- calculate and store an estimated channel sharing parameter for each of said plurality of its possible channels
- calculate and store a channel quality parameter for each of said plurality of its possible channels, indicative of an amount of interference and channel sharing on each of said plurality of its possible channels, using said estimated interference and said estimated channel sharing parameters,

characterized in that said access point is arranged to:

- calculate and store an experienced interference parameter for each of said plurality of its possible channels
- calculate and store an experienced channel sharing parameter for each of said plurality of its possible channels
- calculate and store a corrective difference parameter for each of said plurality of channels, using said estimated interference parameter, said estimated channel sharing parameter, said experienced interference parameter and said experienced channel sharing parameter
- calculate and store an improved channel quality parameter for each of said plurality of its possible channels, using said channel quality parameter and said corrective difference parameter
- dynamically select an optimum channel from said plurality of its possible channels using said improved channel quality parameters.

Furthermore the present invention relates to a method of selecting an optimum channel by an access point in a wireless LAN communication network, comprising the following steps:

- to monitor its access point traffic load
- to send probe requests and probe responses to other access points

- to receive probe requests and probe responses from other access points
- to include information on said traffic load in said probe responses
- to calculate and store an estimated interference parameter for each of a plurality of its possible channels
- to calculate and store an estimated channel sharing parameter for each of said plurality of its possible channels
- to calculate and store a channel quality parameter for each of said plurality of its possible channels, indicative of an amount of interference and channel sharing on each of said plurality of its possible channels, using said estimated interference and said estimated channel sharing parameters,

characterized in that method includes the following steps carried out by said access point:

- to calculate and store an experienced interference parameter for each of said plurality of its possible channels
- to calculate and store an experienced channel sharing parameter for each of said plurality of its possible channels
- to calculate and store a corrective difference parameter for each of said plurality of channels, using said estimated interference parameter, said estimated channel sharing parameter, said experienced interference parameter and said experienced channel sharing parameter
- to calculate and store an improved channel quality parameter for each of said plurality of its possible channels, using said channel quality parameter and said corrective difference parameter
- to dynamically select an optimum channel from said plurality of its possible channels using said improved channel quality parameters.

Moreover, the present invention relates to a computer program product to be loaded by an access point for a wireless LAN communication network, said computer program product, after being loaded, providing said access point with the capacity to:

- monitor its access point traffic load
- send probe requests and probe responses to other access points
- receive probe requests and probe responses from other access points
- include information on said traffic load in said probe responses
- calculate and store an estimated interference parameter for each of a plurality of its possible channels
- calculate and store an estimated channel sharing parameter for each of said plurality of its possible channels
- calculate and store a channel quality parameter for each of said plurality of its possible channels, indicative of an amount of interference and channel sharing on each of said plurality of its possible channels, using said estimated interference and said estimated channel sharing parameters,

characterized in that said computer product, after being loaded, allows said access point to:

- calculate and store an experienced interference parameter for each of said plurality of its possible channels
- calculate and store an experienced channel sharing parameter for each of said plurality of its possible channels
- calculate and store a corrective difference parameter for each of said plurality of channels, using said estimated interference parameter, said estimated channel sharing parameter, said experienced interference parameter and said experienced channel sharing parameter
- calculate and store an improved channel quality parameter for each of said plurality of its possible channels, using said channel quality parameter and said corrective difference parameter
- dynamically select an optimum channel from said plurality of its possible channels using said improved channel quality parameters.

The present invention also relates to a data carrier provided with a computer program product described above.

In the present invention the estimated values from **[Kamerman, Dec 1999]** will get an additional feedback based on the differences between estimated and experienced interference and sharing. It is expected that the differences between experiences and estimations will be valid longer than the experiences and estimations themselves. The calculated values for the channel qualities will be more accurate so an AP can make a better selection for the optimum channel. This will indirectly improve throughput. With the present invention a better performance of a DFS wireless LAN is achieved.

**Brief description of the drawings**

Below, the invention will be explained with reference to some drawings, which are intended for illustration purposes only and not to limit the scope of protection as defined in the accompanying claims.

Fig. 1 shows a wireless LAN with a first access point AP1 and two of its associated network stations NS1, NS2, a second access point AP2 and an interfering source IS.
Fig. 2 shows a block diagram of the arrangement of the present invention for a wireless LAN interface card.
Fig. 3 shows a schematic block diagram of a network station.
Fig. 4 shows a schematic block diagram of an AP.

**Description of preferred embodiments**

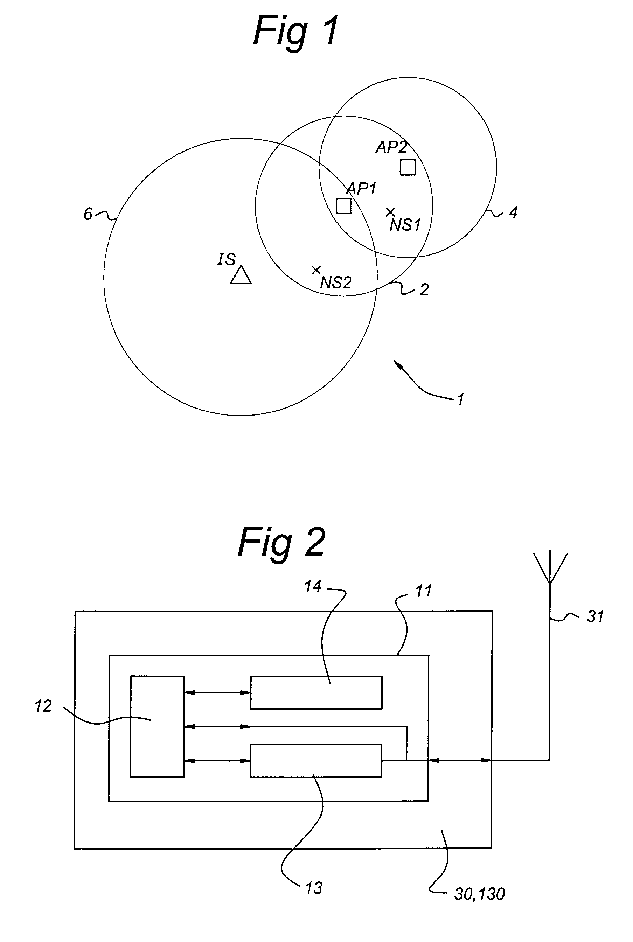

In figure 1, a wireless LAN 1 and two of its access points AP1, AP2 with cells 2, 4 are shown. Also two network stations NS1, NS2 are shown. Access point AP1 is serving cell 2 and access point AP2 has its own cell 4. It is assumed that AP1 is capable of applying dynamic frequency selection (DFS). The boundaries of cell 2 are defined by the carrier detect threshold (CT) used by the network stations NS1, NS2 and the access point AP1. Outside the cell 2, the receive level of signals coming from AP1 will be lower than the CT, so network stations located outside cell 2 will not be able to communicate (be associated) with AP1. The area outside cell 2 is covered by other APs within the same wireless LAN or is not part of the wireless LAN at all. Both network stations NS 1 and NS2 are operating on an operating channel C1 of access point AP1.

In figure 1, an interfering source IS is located in such a way that it will cause interference at the location of AP1. The source IS is transmitting on the same frequencies as AP1. The circle 6 depicts the positions in which the receive level of the signal coming from IS equals the carrier detect threshold of AP1. When the source IS becomes active, AP1 will decide to switch to another channel. Source IS can be, for example, a microwave oven or it may be another AP not capable of switching to an appropriate channel by using DFS. Since the wireless LAN 1 operates in the 2.4 GHz ISM band, which is an unlicensed band, many unpredictable interference sources could interfere with the access point AP1 and its network stations NS1, NS2.

Figure 2 shows an example of a block diagram of an arrangement of the present invention for a medium access controller (MAC) device 11 on a wireless LAN interface card 30 installed in network station NS1, NS2 or on a similar wireless LAN interface card 130 installed in access point AP1, AP2, respectively.

Here, the MAC device 11 is schematically depicted, showing only a signal-processing unit 12, a signal reception level detection circuit 13, an antenna 31 and an on-board memory 14 as needed for the description of this embodiment of the invention. The MAC device 11 may comprise other components not shown here. Also, the components 12, 13, 14 which are shown, may be separate devices or integrated into one device. As desired, the devices also may be implemented in the form of analog or digital circuits. The on-board memory 14 may comprise RAM, ROM, FlashROM and/or other types of memory devices, as are known in the art.

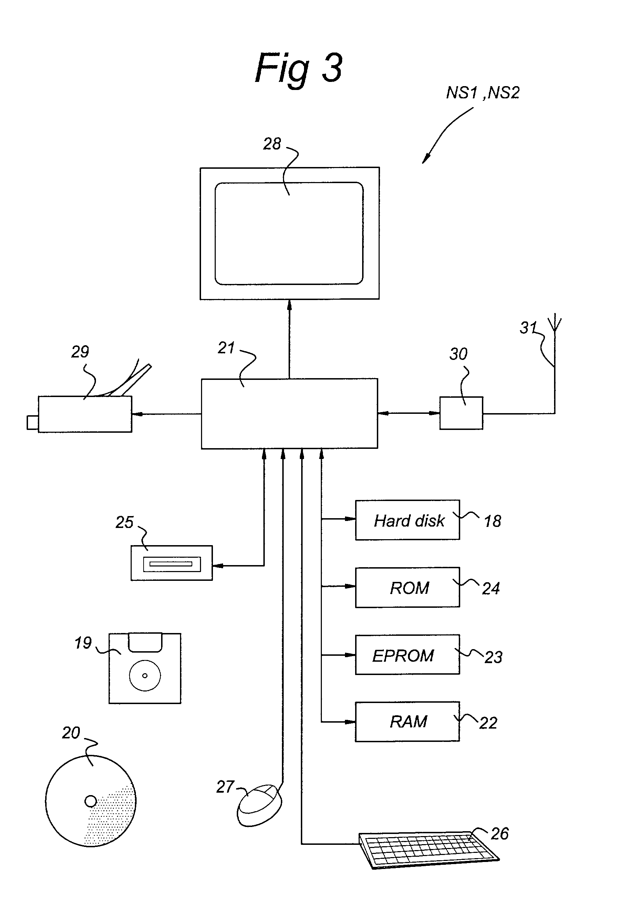

Figure 3 shows a schematic block diagram of an embodiment of a network station NS1, NS2 comprising processor means 21 with peripherals. The processor means 21 is connected to memory units 18, 22, 23, 24 which store instructions and data, one or more reading units 25 (to read, e.g., floppy disks 19, CD ROM's 20, DVD's, etc.), a keyboard 26 and a mouse 27 as input devices, and as output devices, a monitor 28 and a printer 29. Other input devices, like a trackball and a touch screen, and output devices may be provided for. For data-communication over the wireless LAN 1, an interface card 30 is provided. The interface card 30 connects to an antenna 31.

The memory units shown comprise RAM 22, (E)EPROM 23, ROM 24 and hard disk 18. However, it should be understood that there may be provided more and/or other memory units known to persons skilled in the art. Moreover, one or more of them may be physically located remote from the processor means 21, if required. The processor means 21 are shown as one box, however, they may comprise several processing units functioning in parallel or controlled by one main processor, that may be located remote from one another, as is known to persons skilled in the art.

In an alternative embodiment of the present invention, the network station 5, 6 may be a telecommunication device in which the components of interface card 30 are incorporated as known to those skilled in the art.

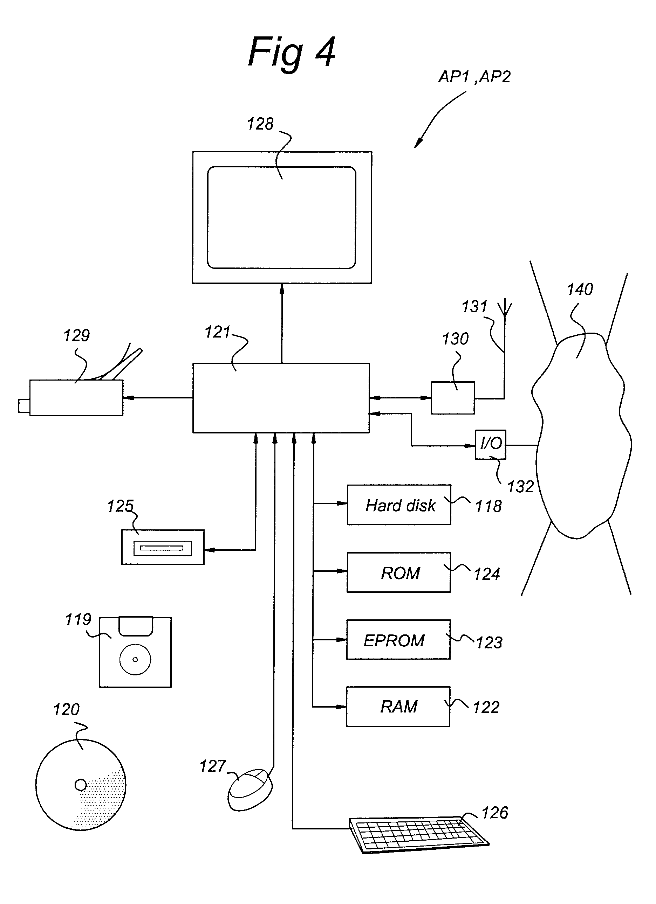

Figure 4 shows a schematic block diagram of an embodiment of access point AP1, AP2 comprising processor means 121 with peripherals. The processor means 121 is connected to memory units 118, 122, 123, 124 which store instructions and data, one or more reading units 125 (to read, e.g., floppy disks 119, CD ROM's 120, DVD's, etc.), a keyboard 126 and a mouse 127 as input devices, and as output devices, a monitor 128 and a printer 129. For data-communication over the wireless LAN 1, an interface card 130 is provided. The interface card 130 connects to an antenna 131. Furthermore, the access point AP1, AP2 is connected to a wired distribution network 140 through I/O means 132 for communication with other access points and/or other communication devices.

The memory units shown comprise RAM 122, (E)EPROM 123, ROM 124 and hard disk 118. However, it should be understood that there may be provided more and/or other memory units known to persons skilled in the art. Moreover, one or more of them may be physically located remote from the processor means 121, if required. The processor means 121 are shown as one box, however, they may comprise several processing units functioning in parallel or controlled by one main processor, that may be located remote from one another, as is known to persons skilled in the art.

Moreover, other input/output devices than those shown (i.e. 126, 127, 128, 129) may be provided.

In an alternative embodiment of the present invention, the access point AP1, AP2 may be a telecommunication device in which the components of interface card 130 are incorporated as known to those skilled in the art.

The MAC device 11 of access point AP1, AP2, shown in figure 2, is arranged to run an algorithm for the dynamic selection of frequencies. The algorithm is used to determine the optimum channel for the AP to switch to. The AP scans all possible channels and for every channel an Improved Channel Quality parameter (ICSIQ) is calculated. ICSIQ values for every channel are stored in a table called Table_ICSIQ. In the following the calculation is described for the calculation of ICSIQ for all possible channels (j).

First a Channel Quality parameter (CSIQ) is calculated for all possible channels (j). The values for CSIQ(j) are stored by the AP in a table called Table_CSIQ. The CSIQ(j) parameter is calculated using an interference I(j) and a channel sharing parameter CS(j). These parameters are formed using load information coming from other APs via Probe Responses, as is described by **[Kamerman, Dec 1999].**

In the present invention the formula for CSIQ(j) is preferably as follows:

$$CSIQ(j) = I(j) \times CorFac + CS(j)$$

where CorFac is a correction factor with a preferable value of 1.

Besides information coming from Probe Responses, an AP uses information on the time it received signals above the defer threshold, and the time it was receiving from (or transmitting to) its associated network stations NS1, NS2. With this information an Experienced Channel Sharing parameter (ECS) is calculated for the channel j on which the AP is operating. The following formula is used:

$$ECS(j) = \frac{T\_foreign\_activity(j)}{T\_elapsed}$$

where T_foreign_activity is a time period (e.g. in ms) within a predefined time period T_elapsed, during which the AP is receiving signals on channel j above the defer threshold, but where the AP is not transmitting itself or receiving data from its associated network stations.

If an AP sends data packets to its associated network stations, the AP waits for the acknowledgement (ACK) signals from the network stations. In case of collisions or interference, the ACK signals are not sent and the AP then decides to retransmit the data. The amount of retransmitted data is used to calculated a second parameter called Experienced Interference parameter (EI). The EI parameter is calculated for the channel j on which the AP is operating in accordance with the following formula:

$$EI(j) = \frac{D\_retransmitted\ (j)}{D\_sent(j)}$$

In this formula D_sent(j) is the amount of data that was sent on channel j from the AP to its associated network stations, during a predefined time period and
D_retransmitted(j) is the amount of data that was retransmitted on channel j by the AP.

Whenever a decision to change the channel is made, e.g. every hour in **[Kamerman, Dec 1999],** the AP will first scan all channels and then calculate the CSIQ(j) values and store the values in Table_CSIQ. Next, the AP will calculate a difference parameter DifCSIQ only for the current channel $j_c$ and store the value as an entry in a table called Table_Dif. To calculate this difference parameter, the estimated interference $I(j_c)$ and sharing $CS(j_c)$ of current channel $j_c$, see **[Kamerman, Dec 1999],** are compared with the experienced interference $EI(j_c)$ and experienced sharing $ECS(j_c)$. The preferred formula for DifCSIQ(j) is the following:

$$DifCSIQ(j) = (I(j) - EI(j)) \times CorFac + (CS(j) - ECS(j))$$

where I(j) and CS(j) are respectively the estimated interference on channel j and the estimated channel sharing on channel j, see **[Kamerman, Dec 1999],** and EI(j) and ECS(j) are respectively the experienced interference and experienced channel sharing on channel j. CorFac is a correction factor. A reasonable value for CorFac is 1, which signifies equal importance of interference and sharing.

After the calculation of DifCSIQ($j_c$) for the current channel $j_c$, the value for an improved channel quality parameter (ICSIQ) is calculated for all channels j, preferably using the formula:

$$ICSIQ(j) = CSIQ(j) - DifCSIQ(j)$$

where CSIQ(j) is the $j^{th}$ entry of the table Table_CSIQ and where DifCSIQ(j) is the $j^{th}$ entry of Tabel_Dif. The parameter CorFac is the correction factor mentioned earlier.

Preferably, every few (e.g., 15) minutes the DifCSIQ values are decreased (for positive values) or increased (for negative values) by a certain amount (e.g., 1). This process continues until DifCSIQ(j) approaches zero. This behaviour is advantageous because differences between estimated and actual interference and sharing are likely to change with time so DifCSIQ becomes less reliable. The entry DifCSIQ(j) in Table_Dif remains zero until the AP has used channel j again and is deciding to change channels again.

Access point AP1, AP2 will change its channel when the sum of the load value (see European patent application 00304239.7, A. Kamerman, H. Moelard, G. Awater, Wireless LAN with load balancing) and the ECS value exceeds a threshold T1 (e.g., 0.5) and the ECS value exceeds a threshold T2 (e.g., 0.1). A channel is chosen corresponding to the lowest value for ICSIQ(j) for all channels j=1...N.

In a preferred embodiment, the time between scanning different channels is less than the 1 minute mentioned in **[Kamerman, Dec 1999],** so that the total scanning interval is decreased. This decreases the chance that two or more APs are scanning at the same time, which could render the retrieved information useless.

**Claims**

**1.** An access point (AP1, AP2) for a wireless LAN communication network comprising a processor (12) and memory (14) storing data and instructions and arranged to:

- monitor its access point traffic load
- send probe requests and probe responses to other access points
- receive probe requests and probe responses from other access points
- include information on said traffic load in said probe responses
- calculate and store an estimated interference parameter for each of a plurality of its possible channels
- calculate and store an estimated channel sharing parameter for each of said plurality of its possible channels
- calculate and store a channel quality parameter (CSIQ) for each of said plurality of its possible channels, indicative of an amount of interference and channel sharing on each of said plurality of its possible channels, using said estimated interference and said estimated channel sharing parameters,

**characterized in that** said access point is arranged to:

- calculate and store an experienced interference parameter for each of said plurality of its possible channels
- calculate and store an experienced channel sharing parameter for each of said plurality of its possible channels
- calculate and store a corrective difference parameter (DifCSIQ) for each of said plurality of channels, using said estimated interference parameter, said estimated channel sharing parameter, said experienced interference parameter and said experienced channel sharing parameter
- calculate and store an improved channel quality parameter (ICSIQ) for each of said plurality of its possible channels, using said channel quality parameter (CSIQ) and said corrective difference parameter (DifCSIQ)
- dynamically select an optimum channel from said plurality of its possible channels using said improved channel quality parameters (ICSIQ).

**2.** An access point (AP1, AP2) according to claim 1, wherein said experienced interference parameter is calculated for a channel j as follows:

$$EI(j) = \frac{D\_retransmitted(j)}{D\_sent(j)}$$

where D_retransmitted(j) is the amount of data that was retransmitted on channel j and where D_sent(j) is an amount of data that was sent on channel j during a predefined time period.

**3.** An access point (AP1, AP2) according to any of the preceding claims, wherein said experienced channel sharing parameter is calculated for a channel j as follows:

$$ECS(j) = \frac{T\_foreign\_activity(j)}{T\_elapsed}$$

where T_foreign_activity(j) is a time period within a predefined time period T_elapsed, during which the access point is receiving signals on channel j above a defer threshold, but where the access point is not transmitting itself or receiving data from its associated network stations.

**4.** An access point (AP1, AP2) according to any of the preceding claims, wherein said corrective difference parameter is calculated for a channel j as follows:

$$DifCSIQ(j) = (I(j) - EI(j)) \times CorFac + (CS(j) - ECS(j))$$

where I(j) is said estimated interference parameter and CS(j) is said estimated channel sharing parameter, and EI(j) is said experienced interference parameter and ECS(j) is said experienced channel sharing parameter and CorFac is a correction factor.

**5.** An access point (AP1, AP2) according to claim 4, wherein said improved channel quality parameter is calculated for a channel j as follows:

$$ICSIQ(j) = I(j) \times CorFac + CS(j) - DifCSIQ(j)$$

**6.** A wireless LAN communication network, comprising at least one access point according to any of the preceding claims.

**7.** Method of selecting an optimum channel by an access point in a wireless LAN communication network, comprising the following steps:

- to monitor its access point traffic load
- to send probe requests and probe responses to other access points
- to receive probe requests and probe responses from other access points
- to include information on said traffic load in said probe responses
- to calculate and store an estimated interference parameter for each of a plurality of its possible channels
- to calculate and store an estimated channel sharing parameter for each of said plurality of its possible channels
- to calculate and store a channel quality parameter (CSIQ) for each of said plurality of its possible channels, indicative of an amount of interference and channel sharing on each of said plurality of its possible channels, using said estimated interference and said estimated channel sharing parameters,

**characterized in that** method includes the following steps carried out by said access point:

- to calculate and store an experienced interference parameter for each of said plurality of its possible channels
- to calculate and store an experienced channel sharing parameter for each of said plurality of its possible channels
- to calculate and store a corrective difference parameter (DifCSIQ) for each of said plurality of channels, using said estimated interference parameter, said estimated channel sharing parameter, said experienced interference parameter and said experienced channel sharing parameter
- to calculate and store an improved channel quality parameter (ICSIQ) for each of said plurality of its possible channels, using said channel quality parameter (CSIQ) and said corrective difference parameter (DifCSIQ)
- to dynamically select an optimum channel from said plurality of its possible channels using said improved channel quality parameters (ICSIQ).

**8.** Computer program product to be loaded by an access point for a wireless LAN communication network, said computer program product, after being loaded, providing said access point with the capacity to:

- monitor its access point traffic load

- send probe requests and probe responses to other access points
- receive probe requests and probe responses from other access points
- include information on said traffic load in said probe responses
- calculate and store an estimated interference parameter for each of a plurality of its possible channels
- calculate and store an estimated channel sharing parameter for each of said plurality of its possible channels
- calculate and store a channel quality parameter (CSIQ) for each of said plurality of its possible channels, indicative of an amount of interference and channel sharing on each of said plurality of its possible channels, using said estimated interference and said estimated channel sharing parameters,

**characterized in that** said computer product, after being loaded, allows said access point to:

- calculate and store an experienced interference parameter for each of said plurality of its possible channels
- calculate and store an experienced channel sharing parameter for each of said plurality of its possible channels
- calculate and store a corrective difference parameter (DifCSIQ) for each of said plurality of channels, using said estimated interference parameter, said estimated channel sharing parameter, said experienced interference parameter and said experienced channel sharing parameter
- calculate and store an improved channel quality parameter (ICSIQ) for each of said plurality of its possible channels, using said channel quality parameter (CSIQ) and said corrective difference parameter (DifCSIQ)
- dynamically select an optimum channel from said plurality of its possible channels using said improved channel quality parameters (ICSIQ).

9. Data carrier provided with a computer program product according to claim 8.

# Fig 1

AP2

AP1

6

NS1

IS

NS2

4

2

1

# Fig 2

14

11

31

12

13

30,130

# Fig 3

*NS1 ,NS2*

28

29

21

30

31

Hard disk — 18

25

ROM — 24

19

EPROM — 23

20

RAM — 22

27

26

# Fig 4

AP1 ,AP2

128

129

121

130

131

140

I/O

132

125

Hard disk 118

ROM 124

119

EPROM 123

RAM 122

120

127

126

European Patent Office

**EUROPEAN SEARCH REPORT**

Application Number

EP 01 30 4129

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 933 420 A (JASZEWSKI GARY M ET AL) 3 August 1999 (1999-08-03) * column 2, line 23 – line 50 * * column 4, line 26 – column 9, line 58 * | 1,6-8 | H04L12/28 |
| A | US 5 815 811 A (PINARD PATRICK ET AL) 29 September 1998 (1998-09-29) * column 5, line 29 – column 6, line 30 * | 1,6-8 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 17 December 2001 | Behringer, L.V. |

EPO FORM 1503 03.82 (P04C01)

## ANNEX TO THE EUROPEAN SEARCH REPORT
## ON EUROPEAN PATENT APPLICATION NO.

EP 01 30 4129

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2001

| Patent document cited in search report | | Publication date | Patent family member(s) | | Publication date |
|---|---|---|---|---|---|
| US 5933420 | A | 03-08-1999 | US | 6208629 B1 | 27-03-2001 |
| US 5815811 | A | 29-09-1998 | US | 5528621 A | 18-06-1996 |
| | | | US | 5280498 A | 18-01-1994 |
| | | | US | 5142550 A | 25-08-1992 |
| | | | US | 5029183 A | 02-07-1991 |
| | | | CA | 2186923 A1 | 28-04-1997 |
| | | | EP | 0781005 A1 | 25-06-1997 |
| | | | JP | 9215044 A | 15-08-1997 |
| | | | US | 6002918 A | 14-12-1999 |
| | | | AU | 667264 B2 | 14-03-1996 |
| | | | AU | 5931994 A | 13-10-1994 |
| | | | CA | 2119335 A1 | 09-10-1994 |
| | | | EP | 0619663 A2 | 12-10-1994 |
| | | | JP | 7099500 A | 11-04-1995 |
| | | | AT | 178748 T | 15-04-1999 |
| | | | AU | 657149 B2 | 02-03-1995 |
| | | | AU | 2089992 A | 03-06-1993 |
| | | | CA | 2072345 A1 | 28-05-1993 |
| | | | DE | 69228856 D1 | 12-05-1999 |
| | | | DE | 69228856 T2 | 11-11-1999 |
| | | | EP | 0544337 A1 | 02-06-1993 |
| | | | ES | 2130147 T3 | 01-07-1999 |
| | | | JP | 5244158 A | 21-09-1993 |
| | | | US | 5479441 A | 26-12-1995 |
| | | | US | 5668803 A | 16-09-1997 |
| | | | AT | 168845 T | 15-08-1998 |
| | | | CA | 2051212 A1 | 29-06-1992 |
| | | | DE | 69129838 D1 | 27-08-1998 |
| | | | DE | 69129838 T2 | 25-03-1999 |
| | | | EP | 0496986 A2 | 05-08-1992 |
| | | | EP | 0797332 A2 | 24-09-1997 |
| | | | ES | 2118733 T3 | 01-10-1998 |
| | | | JP | 4304049 A | 27-10-1992 |
| | | | US | 5401944 A | 28-03-1995 |
| | | | AU | 627333 B2 | 20-08-1992 |
| | | | AU | 5808090 A | 03-01-1991 |
| | | | CA | 1310370 A1 | 17-11-1992 |
| | | | DE | 69030936 D1 | 24-07-1997 |
| | | | DE | 69030936 T2 | 29-01-1998 |
| | | | EP | 0405074 A2 | 02-01-1991 |
| | | | EP | 0770962 A2 | 02-05-1997 |
| | | | JP | 2506481 B2 | 12-06-1996 |
| | | | JP | 3038133 A | 19-02-1991 |
| | | | US | 5157687 A | 20-10-1992 |
| | | | US | 5103461 A | 07-04-1992 |

EPO FORM P0459

For more details about this annex : see Official Journal of the European Patent Office, No. 12/82